Europäisches Patentamt

(19) European Patent Office

Office européen des brevets

(11) Veröffentlichungsnummer: **0 024 509**
**B1**

(12) # EUROPÄISCHE PATENTSCHRIFT

(45) Veröffentlichungstag der Patentschrift:
25.05.83

(51) Int. Cl.³: **A 23 K  1/175**

(21) Anmeldenummer: **80103723.5**

(22) Anmeldetag: **01.07.80**

(54) **Verfahren zur Herstellung von mineralischen Mischfuttermitteln.**

(30) Priorität: **31.08.79 DE 2935171**

(43) Veröffentlichungstag der Anmeldung:
**11.03.81 Patentblatt 81/10**

(45) Bekanntmachung des Hinweises auf die Patenterteilung:
**25.05.83 Patentblatt 83/21**

(84) Benannte Vertragsstaaten:
**AT BE CH DE FR GB IT LI LU NL SE**

(56) Entgegenhaltungen:
**DE-A-2 430 267**
**DE-A-2 643 683**
**DE-B-2 612 887**
**FR-A-2 109 640**

(73) Patentinhaber: **HOECHST AKTIENGESELLSCHAFT,
Postfach 80 03 20, D-6230 Frankfurt/Main 80 (DE)**

(72) Erfinder: **Dany, Franz-Josef, Dr., Heddinghovener
Strasse 47, D-5042 Erftstadt (DE)**
Erfinder: **Ulrich, Hannsjörg, Dr.,
von-Bodelschwingh-Weg 47, D-5042 Erftstadt (DE)**
Erfinder: **Kalteyer, Gerd, Laurentiusstrasse 8,
D-5042 Erftstadt (DE)**

**0 024 509**

## Verfahren zur Herstellung von mineralischen Mischfuttermitteln

Die vorliegende Erfindung betrifft ein Verfahren zur Herstellung von mineralischen Mischfuttermitteln mit Hilfe eines Mischers.

Es ist bekannt, mineralische Mischfuttermittel durch Mischen von Phosphaten des Natriums, Magnesiums und Calciums, Viehsalz, Futterkalk, Kleie, Vitaminen und Spurenelementen herzustellen. Dabei haben die Mischzeit und die Art des Mischers auf die homogene Verteilung der Stoffe wesentlichen Einfluß, wobei meist Zwangsmischer mit bewegten Mischorganen in Form von Schaufeln, Paddeln oder Schnecken verwendet werden (»Ullmanns Encyklopädie der technischen Chemie«, 4. Auflage, Weinheim 1976, Seiten 41 bis 60).

Aus der FR-A-2 109 640 ist ein Verfahren zur Herstellung von mineralischen Beifuttermischungen unter Verwendung schnellaufender Mischer bekannt. Dabei werden zunächst Monocalciumphosphat, Natriumchlorid, Magnesiumoxid und als Spurenelemente Verbindungen des Zinks, Kupfers, Mangans und Cobalts zu einer homogenen Mischung verarbeitet. Zu der homogenen Mischung werden Melasse, Phosphorsäure und Wasser hinzugegeben. Nach kurzer Mischzeit fällt ein Granulat an.

Nachteilig ist bei den bekannten Futtermischungen, daß sie einen Staubanteil aufweisen, welcher bei der Futteraufnahme durch das Vieh die Atemwege reizende Belästigungen hervorruft. Darüber hinaus neigen Futtermischungen mit grob strukturierten Mischungskomponenten zur Entmischung des Fertigproduktes.

Es ist daher Aufgabe der vorliegenden Erfindung, ein Verfahren zur Herstellung von mineralischen Mischfuttermitteln anzugeben, bei welchen ausgehend von kostengünstigen pulverförmigen Mischungskomponenten unter Verwendung üblicher Mischorgane Fertigprodukte erzielt werden, welche praktisch staubfrei sind und bei welchen die nachträgliche Entmischung der einzelnen Mischungskomponenten unterbleibt. Das wird erfindungsgemäß dadurch erreicht, daß einer pulverförmigen Mischung aus Dinatriumphosphat, Dimagnesiumphosphat und Dicalciumphosphat, aus Viehsalz und Futterkalk sowie gegebenenfalls Kleie, Spurenelementen und Vitaminen eine höchstens 15gewichtsprozentige Phosphorsäure in einer solchen Menge zugesetzt wird, daß ihr Wassergehalt mindestens 13 Gew.-%, bezogen auf die Summe der Phosphate in der Mischung, beträgt; daß die die Phosphorsäure enthaltende Mischung im Mischer mindestens 3 Minuten bei 40 bis 120 UpM bewegt und dabei granuliert wird; und daß das resultierende feuchte Granulat unter mechanischer Bewegung mit Hilfe eines Warmluftstromes mindestens 3 Minuten getrocknet wird, wobei die Temperatur des Warmluftstromes so gewählt wird, daß die Temperatur an der Oberfläche des getrockneten Granulates 60° C nicht überschreitet.

Das Verfahren gemäß der Erfindung kann wahlweise auch noch dadurch ausgestaltet werden, daß

a)   eine 3- bis 12gewichtsprozentige Phosphorsäure zugesetzt wird;
b)   die die Phosphorsäure enthaltende Mischung mit 80 bis 115 UpM bewegt wird;
c)   der pulverförmigen Mischung zusätzlich Melasse zugesetzt wird;
d)   bis zu 10 Gew.-% Melasse, bezogen auf die Mischung, zugesetzt wird.

Beim erfindungsgemäßen Verfahren wird ein gut aushärtendes, mechanisch widerstandsfähiges Granulat erhalten, welches auch bei der Absackung nicht beschädigt wird. Das rührt offensichtlich daher, daß ein Teil der nur teilhydratisierten, sauren Phosphate der Mischung noch Wasser chemisch binden kann, wozu jedoch Wasser im Überschuß angeboten werden muß. Das Austrocknen des Überschußwassers führt dann zu verfilzten Kristalliten, deren Ausbildung durch Phosphorsäure offenbar begünstigt wird. Während beispielsweise Melasse allein die Verfilzung der Kristallite hemmt, wird beim gleichzeitigen Einsatz von Melasse und Phosphorsäure ein mechanisch genügend stabiles Granulat erhalten.

Wenn das Überschußwasser beispielsweise während der Lagerung langsam abdampft, besteht die Gefahr, daß die entstandenen Granulatteile miteinander verkleben. Das wird gemäß der Erfindung durch das Trocknen der Oberfläche des feuchten Granulates mit einem Warmluftstrom unter mechanischer Bewegung wie Umwenden verhindert. Dabei liegt das feuchte Granulat auf einem feinmaschigen Sieb auf, wobei die Warmluft beispielsweise mit einem auf 220° C aufgeheizten Fön erzeugt und über eine trichterförmige Zuführung von unten durch das Granulat geleitet wird. Durch das dadurch bewirkte Trocknen der Oberfläche der Granulatteilchen wird ihr nachträgliches Verbacken verhindert. Die Temperatur der Oberfläche der Granulatteilchen bleibt dabei unter 60° C, so daß gegebenenfalls enthaltene Vitamine nicht zerstört werden.

Beim erfindungsgemäßen Verfahren ist die Umdrehungsgeschwindigkeit des Mischers, welche vom Mischertyp und der Flüssigkeitsaufgabe abhängig ist, von besonderer Bedeutung. Bei höherer Umdrehungsgeschwindigkeit erhöht sich der Feinanteil; ab 500 UpM ist der Staubanteil beträchtlich.

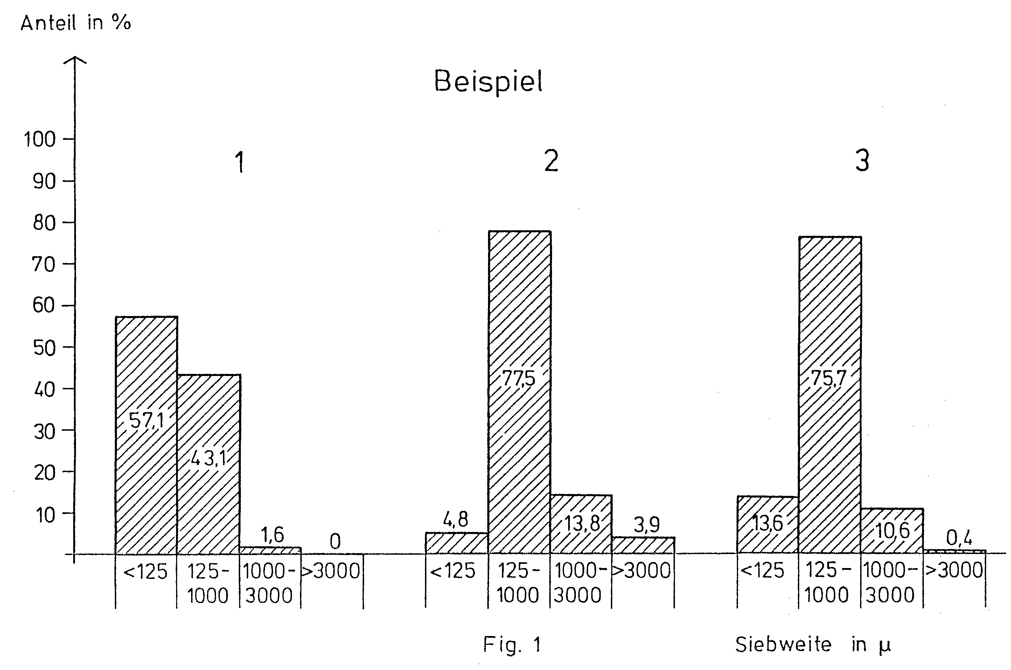

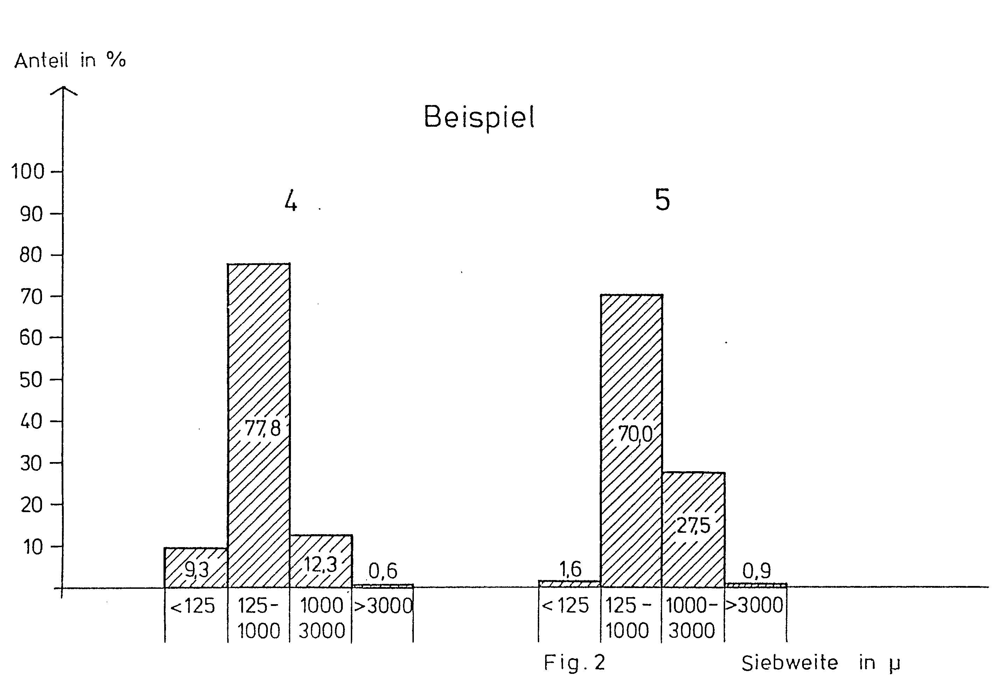

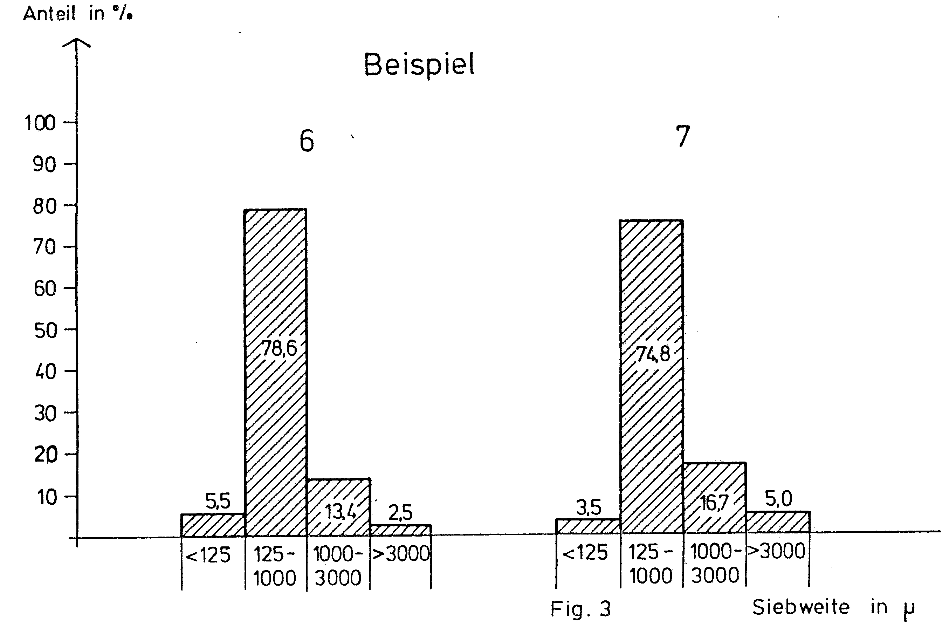

In der Zeichnung (Fig. 1 bis 3) sind die Ergebnisse der folgenden Beispiele 1 bis 7 auf der Grundlage von Siebanalysen in Säulendiagrammen dargestellt, wobei die über den Säulen stehenden Ziffern mit der Beispiel-Nummer identisch sind.

2

**0 024 509**

Beispiel 1 (Vergleichsbeispiel)

In einem Pflugschar-Mischer von 15 kg Fassungsvermögen wurden eingesetzt:

2000 g   Calcium-Magnesium-Natrium-Phosphat (mit 9 Gew.-% Ca, 5 Gew.-% Mg, 12 Gew.-% Na und 17,5 Gew.-% P)
1500 g   Calcium-carbonat (Futterkalk)
500 g   Natriumchlorid (Viehsalz)
200 g   wasserfreies Dicalciumphosphat
300 g   Melasse, ca. 70%ig

Die Mischung wurde 5 Minuten bei 115 UpM bewegt.

Beispiel 2 (gemäß der Erfindung)

Im gleichen Apparat wie in Beispiel 1 wurden die gleichen Komponenten wie in Beispiel 1 eingesetzt, wobei jedoch die Melasse in 300 g Wasser, welchem 4,7 g 85%ige Phosphorsäure zugesetzt war, gelöst wurde.

Die Mischung wurde 5 Minuten bei 115 UpM bewegt und anschließend 10 Minuten mit Warmluft von 220° C, gemessen am Austrittsrohr des Warmlufterzeugers, getrocknet.

Beispiel 3 (Vergleichsbeispiel)

In einem Turbulent-Mischer von 1600 kg Fassungsvermögen wurden eingesetzt:

250 kg   Calcium-Magnesium-Natrium-Phosphat (mit 9 Gew.-% Ca, 5 Gew.-% Mg, 12 Gew.-% Na und 17,5 Gew.-% P)
110 kg   Futterkalk
40 kg   Viehsalz
18 kg   wasserfreies Dicalciumphosphat
50 kg   Spurenelemente

Diesen Stoffen wurden 3 kg 85%ige Phosphorsäure in 35 l Wasser und gleichzeitig, aber an anderer Stelle 35 kg Melasse (ca. 70%ig) zugesetzt und die gesamte Mischung 5 Minuten bei 80 UpM bewegt. Die Trocknung erfolgte während 24 Stunden im Sack, wobei die gesamte Masse erhärtete. Durch Kneten der Säcke wurde wieder ein rieselfähiges Granulat erhalten.

Beispiel 4 (gemäß der Erfindung)

In einen konischen Mischer mit umlaufender Mischschnecke, welche sich mit 24 UpM drehte, während sie in 35 Sekunden eine vollständige Kreisbewegung ausführte, wurden eingesetzt:

400 kg   Calcium-Magnesium-Natrium-Phosphat (mit 9 Gew.-% Ca, 5 Gew.-% Mg, 12 Gew.-% Na und 17,5 Gew.-% P)
240 kg   Futterkalk
100 kg   Viehsalz
40 kg   wasserfreies Dicalciumphosphat
10 kg   Eisen-III-oxid

Diesen Stoffen, welche etwa 1/3 der Mischerkapazität ausfüllten, wurde in kürzester Zeit schubweise eine Lösung zugesetzt, welche aus 60 l Wasser, 60 l Melasse (70- bis 80%ig) und 4,5 l 85%iger Phosphorsäure bestand. Nachdem der Mischer 5 Minuten gedreht hatte, lag ein feuchtes Granulat vor, welches 6 Minuten mit Warmluft von 220° C, gemessen am Austrittsrohr des Warmlufterzeugers, getrocknet wurde.

Beispiel 5 (gemäß der Erfindung)

In einem Doppelschnecken-Mischer mit horizontal angeordneten Wellen und mit einer Kapazität von 1000 kg wurden eingesetzt:

300 kg Calcium-Magnesium-Natrium-Phosphat (mit 9 Gew.-% Ca, 5 Gew.-% Mg, 12 Gew.-% Na und 17,5 Gew.-% P)
  75 kg Futterkalk
38,5 kg Viehsalz
  25 kg Kleie
  10 kg Spurenelemente
   1,5 kg Vitamin-Konzentrat

Diesen Stoffen wurde eine Lösung zugesetzt, welche aus 45 l Wasser, 50 kg Melasse und 2,5 kg 85%iger Phosphorsäure bestand. Der Mischer wurde 5 Minuten mit 60 UpM bewegt. Das entstandene feuchte Granulat wurde 10 Minuten mit Warmluft von 180°C, gemessen am Austrittsrohr des Warmlufterzeugers, getrocknet.

### Beispiel 6 (gemäß der Erfindung)

In einem Pflugschar-Mischer von 15 kg Fassungsvermögen wurden eingesetzt:

2300 g Calcium-Magnesium-Natrium-Phosphat (mit 9 Gew.-% Ca, 5 Gew.-% Mg, 12 Gew.-% Na und 17,5 Gew.-% P)
1500 g Futterkalk
 500 g wasserfreies Dicalciumphosphat
 500 g Viehsalz

Diesen Stoffen wurde 4,7 g 85%ige Phosphorsäure in 445 g Wasser zugesetzt und die gesamte Mischung 7 Minuten bei 115 UpM bewegt. Das entstandene Granulat wurde 5 Minuten mit Warmluft von 220°C, gemessen am Austrittsrohr des Warmlufterzeugers, getrocknet.

### Beispiel 7 (nach der Erfindung)

Im gleichen Apparat wie in Beispiel 6 wurden eingesetzt:

2000 g Calcium-Magnesium-Natrium-Phosphat (mit 9 Gew.-% Ca, 5 Gew.-% Mg, 12 Gew.-% Na und 17,5 Gew.-% P)
1500 g Futterkalk
 200 g wasserfreies Dicalciumphosphat
 500 g Viehsalz

Diesen Stoffen wurde 9 g 85%ige Phosphorsäure in 340 g Wasser zugesetzt und die gesamte Mischung 10 Minuten bei 115 UpM bewegt. Das entstandene Granulat wurde 3 Minuten mit Warmluft von 240°C, gemessen am Austrittsrohr des Warmlufterzeugers, getrocknet.

### Beispiel 8

Um aufzuzeigen, welchen Einfluß der Zusatz von Phosphorsäure und/oder Melasse auf die Härte des Granulatkornes haben, wurden Abriebversuche durchgeführt.

Hierzu wurden von verschiedenen Granulaten, welche jeweils 24 Stunden gelagert waren, die Kornfraktionen zwischen 500 und 2000 μ abgesiebt und jeweils in einer Trommel aus rostfreiem Stahl (Volumen: 800 ml) mit 8 Edelstahl-Kugeln (Durchmesser ca. 20 mm; Gewicht je Kugel ca. 33 g) 5 Minuten mit 100 UpM gemahlen. Der Abrieb wurde anschließend durch Siebung als der Anteil bestimmt, welcher ein 500 μ-Sieb passierte.

Die verschiedenen Granulate waren jeweils aus 2000 g Calcium-Magnesium-Natrium-Phosphat (mit 9 Gew.-% Ca, 5 Gew.-% Mg, 12 Gew.-% Na und 17,5 Gew.-% P) und 300 g Wasser sowie aus den in der folgenden Tabelle genannten Zusätzen analog der in Beispiel 6 geschilderten Weise hergestellt worden:

| Granulat | Zusatz [g] 85%ige $H_3PO_4$ | Melasse | Abrieb [%] |
|---|---|---|---|
| a | — | — | 52,9 |
| b | 4,7 | — | 43,8 |
| c | — | 100 | 73,4 |
| d | 4,7 | 100 | 66,8 |

Beispiel 9

Das 24 Stunden gelagerte Granulat nach Beispiel 2 wies einen Abrieb von 33,2% auf, während ein mit Ausnahme des Zusatzes von Phosphorsäure, sonst jedoch analog Beispiel 2 hergestelltes und 24 Stunden gelagertes Granulat einen Abrieb von 35,3% aufwies.

Die Ermittlung des Abriebes erfolgte gemäß Beispiel 8.


**Patentansprüche**

1. Verfahren zur Herstellung von mineralischen Mischfuttermitteln mit Hilfe eines Mischers, dadurch gekennzeichnet, daß einer pulverförmigen Mischung aus Dinatriumphosphat, Dimagnesiumphosphat und Dicalciumphosphat, aus Viehsalz und Futterkalk sowie gegebenenfalls Kleie, Spurenelementen und Vitaminen eine höchstens 15gewichtsprozentige Phosphorsäure in einer solchen Menge zugesetzt wird, daß ihr Wassergehalt mindestens 13 Gew.-%, bezogen auf die Summe der Phosphate in der Mischung, beträgt; daß die die Phosphorsäure enthaltende Mischung im Mischer mindestens 3 Minuten bei 40 bis 120 UpM bewegt und dabei granuliert wird und daß das resultierende feuchte Granulat unter mechanischer Bewegung mit Hilfe eines Warmluftstromes mindestens 3 Minuten getrocknet wird, wobei die Temperatur des Warmluftstromes so gewählt wird, daß die Temperatur an der Oberfläche des getrockneten Granulates 60°C nicht überschreitet.

2. Verfahren nach Anspruch 1, dadurch gekennzeichnet, daß eine 3- bis 12gewichtsprozentige Phosphorsäure zugesetzt wird.

3. Verfahren nach Anspruch 1 oder 2, dadurch gekennzeichnet, daß die die Phosphorsäure enthaltende Mischung mit 80 bis 115 UpM bewegt wird.

4. Verfahren nach einem der Ansprüche 1 bis 3, dadurch gekennzeichnet, daß der pulverförmigen Mischung zusätzlich Melasse zugesetzt wird.

5. Verfahren nach Anspruch 4, dadurch gekennzeichnet, daß bis zu 10 Gew.-% Melasse, bezogen auf die Mischung, zugesetzt wird.


**Claims**

1. Process for making mineral compound cattle food with the aid of a mixer, characterised in that a pulverulent mixture of disodium phosphate, dimagnesium phosphate and dicalcium phosphate, cattle salt, feed lime, and optionally bran, trace elements and vitamines is admixed with the quantity of an at most 15 weight% phosphoric acid just necessary for its water content to be at least 13 weight%, basend on the sum of the phosphates in the mixture; the phosphoric acid-containing mixture is mixed in the mixer over a period of at least 3 minutes at 40 to 120 rpm and thereby granulated; the resulting moist granulate is dried over a period of at least 3 minutes with the aid of a stream of warm air while being mechanically agitated, the temperature of the stream of warm air being selected so that the temperature at the surface of the dried granulate does not exceed 60°C.

2. Process as claimed in claim 1, characterised in that a phosphoric acid of 3 to 12 weight% strength is added.

3. Process as claimed in claim 1 or 2, characterized in that the mixture containing the phosphoric acid is agitated at 80 to 115 upm.

4. Process as claimed in any of claims 1 to 3, characterised in that the pulverulent mixture is additionally admixed with molassess.

5. Process as claimed in claim 4, characterised in that up to 10 weight% of molasses, based on the mixture, is added.

5

**Revendications**

1. Procédé de préparation de fourrages composés minéraux à l'aide d'un mélangeur, caractérisé en ce que l'on ajoute, à un mélange pulvérulent de phosphate disodique, de phosphate dimagnésique, de phosphate dicalcique, de sel à bétail, de chaux à bétail et éventuellement de son, d'oligo-éléments et de vitamines, autant d'acide phosphorique à 15% en poids au maximum qu'il en faut pour que sa teneur en eau soit au moins égale à 13% en poids, par rapport à la somme des phosphates dans le mélange; on agite le mélange contenant l'acide phosphorique danz le mélangeur pendant au moins 3 min à 40—120 tr/min pour le granuler; on sèche pendant au moins 3 min le granulé humide résultant à l'aide d'un courant d'air chaud avec agitation mécanique, la températuren du courant d'air chaud étant choisie de manière que la température à la surface du granulé séché ne dépasse pas 60°C.

2. Procédé selon la revendication 1, caractérisé en ce que l'on ajoute un acide phosphorique à 3—12% en poids.

3. Procédé selon la revendication 1 ou 2, caractérisé en ce que l'on agite le mélange contenant l'acide phosphorique à 80—115 tr/min.

4. Procédé selon l'une des revendications 1 à 3, caractérisé en ce que l'on ajoute au mélange pulvérulent de la mélasse comme composant supplémentaire.

5. Procédé selon la revendication 4, caractérisé en ce que l'on ajoute jusqu'à 10% en poids de mélasse par rapport au mélange.

Anteil in %

Beispiel

100 — 

90 —          1                              2                              3

80 —

70 —

60 —

50 —

40 —

30 —    57,1

20 —         43,1                    77,5                          75,7

10 —                                                      13,6        10,6
                    1,6    0      4,8        13,8   3,9                     0,4

| <125 | 125–1000 | 1000–3000 | >3000 | <125 | 125–1000 | 1000–3000 | >3000 | <125 | 125–1000 | 1000–3000 | >3000 |

Fig. 1                                    Siebweite in μ

Beispiel

Fig. 2

Anteil in ‰

Beispiel

6

7

78,6

74,8

5,5

13,4

2,5

3,5

16,7

5,0

<125 | 125-1000 | 1000-3000 | >3000

<125 | 125-1000 | 1000-3000 | >3000

Fig. 3

Siebweite in µ

0 024 509